# EUROPÄISCHE PATENTSCHRIFT

(11) **EP 1 342 940 B1**
(45) Veröffentlichungstag und Bekanntmachung des Hinweises auf die Patenterteilung: **16.08.2006**
(21) Anmeldenummer: 03000897.3
(22) Anmeldetag: 16.01.2003
(51) Int. Cl.: F16H 61/18, F16H 61/24, F16H 63/30

(54) **Vorrichtung zum Erzeugen einer Gegenkraft an einer Schaltwelle**
Device for producing a counterforce on a selector shaft
Dispositif pour produire une force antagoniste pour un arbre de commande

(30) Priorität: 06.03.2002 DE 10209729
(43) Veröffentlichungstag der Anmeldung: 10.09.2003
(73) Patentinhaber: Schaeffler KG, 91074 Herzogenaurach (DE); DaimlerChrysler AG, 70546 Stuttgart (DE)
(72) Erfinder: Krämer, Klaus, 91460 Baudenbach (DE); Follmer, Egon, Dipl.-Ing., 70197 Stuttgart (DE); Schumacher, Michael, Dipl.-Ing. (BA), 70794 Filderstadt (DE)
(74) Vertreter: Blaumeier, Jörg

(56) Entgegenhaltungen:
- EP-A- 0 849 506
- DE-A1- 10 016 364
- DE-A1- 19 520 209
- US-A- 4 583 418

## Beschreibung

### Gebiet der Erfindung

Die Erfindung betrifft ein Schaltmodul, umfassend eine Schaltwelle mit einem zu dieser festen Schwenkhebel eine Vorrichtung zum Erzeugen einer Gegenkraft an dem Schwenkhebel, wobei die Schaltwelle zur Wahl mindestens einer Gasse in der Vorrichtung schwenkbar sowie zum Schalten wenigstens eines Ganges in der Gasse zur Vorrichtung längs verschiebbar ist und wobei der Schwenkhebel bei der Wahl der Gasse zumindest zeitweise einen um eine Schwenkachse schwenkbaren sowie mit einer Rampe versehenen Schlepphebel, gegen an der Rampe umgesetzte sowie verstärkte Federkräfte, beaufschlagt.

### Hintergrund der Erfindung

Ein derartige, Modul ist in EP 0 849 506 A1 beschrieben. Es ist das Schaltschema für ein Sechsganggetriebe dargestellt. Drei nebeneinanderliegende Gassen sind für das Schalten der sechs Vorwärtsgänge vorgesehen. In einer vierten Gasse wird der Rückwärtsgang geschaltet. Ein in das Schaltschema skizziertes Diagramm zeigt den Verlauf der Wählkraft in Abhängigkeit des Wählweges. Eine Bewegung entlang der Abszisse zwischen den einzelnen Gassen entspricht dabei dem Schwenken der Schaltwelle. Wählkräfte werden mittels der beschriebenen Vorrichtung bei einer Bewegung aus der Neutralstellung (Schaltgasse dritter und vierter Gang) nach rechts in die Schaltgasse des fünften und sechsten Ganges sowie aus der Neutralstellung heraus nach links in die Schaltgasse des ersten und zweiten Ganges hinein und darüber hinaus beim Einwählen in die Gasse des Rückwärtsganges erzeugt.

Beim Einwählen in die Gasse des Rückwärtsganges steigt die Wählkraft sprungartig an und signalisiert dem Bediener das Wählen des Rückwärtsganges. Dem Bediener wird mittels der am Schalthebel deutlich ansteigenden Schaltkraft beim Anwählen der Gasse des Rückwärtsganges signalisiert, dass er im Begriff ist, den Rückwärtsgang einzulegen. Die Orientierung des Bedieners an dem Schalthebel ist damit erleichtert. Das mit der ansteigenden Wählkraft abgegebene Signal an den Bediener wird insbesondere genutzt, um den Bediener vor unbeabsichtigten Wechseln aus einer Gasse der Vorwärtsgänge in die Gasse für den Rückwärtsgang zu warnen. Diese sogenannte Schlagsperre wirkt bei unbeabsichtigtem Wählen aber auch bei beabsichtigtem Wählen Gasse des Rückwärtsganges. Die Wählkraft ist in dem Moment wesentlich höher als die Kräfte, die beim Wählen der Gassen der Vorwärtsgänge am Schaltknauf auftreten. Nach dem Überwinden der erhöhten Wählkraft sinkt die Betätigungskraft wieder auf ein normales Niveau.

Die Wählkräfte am Schalthebel sind mittels einer Vorrichtung zum Erzeugen einer Gegenkraft an der Schaltwelle erzeugt. Die Schaltwelle ist für das Wählen der Gassen schwenkbar und für das Schalten von einem oder zwei Gängen in der Gasse längsverschiebbar in einem Gehäuse eines Getriebes aufgenommen. An der Schaltwelle sind Schaltfinger befestigt, von denen wahlweise einer beim Wählen in eine Schaltschiene oder Schaltschwinge eingreift und von denen wahlweise einer beim Schalten eine Schiebemuffe betätigt. Die schwenkende Schaltwelle betätigt einen Schwenkhebel. Die längsbewegte Schaltwelle bewegt sich relativ zu dem längs festen Schwenkhebel. Der Schwenkhebel steht mit mehreren Schlepphebeln in einer Wirkverbindung.

Einer der Schlepphebel ist für die Erzeugung einer erhöhten Wählkraft beim Wählen der Gasse des Rückwärtsganges vorgesehen. Der Schlepphebel ist um einen Schwenkpunkt schwenkbar an dem Gehäuse befestigt. Eine Feder spannt den Schlepphebel gegen eine Rolle an dem Schwenkhebel vor und greift dazu am Schlepphebel an. An dem Schlepphebel ist eine Rampe ausgebildet. Der beim Wählen der Gasse des Rückwärtsganges gegen den Schlepphebel geschwenkte Schwenkhebel wirkt auf den Schlepphebel. Der Schlepphebel bewegt sich gegen den Widerstand der Feder um den Schwenkpunkt. Dem Schwenkhebel wird ein Widerstand entgegengesetzt, der die Betätigungskraft am Schalthebel erhöht. Der Widerstand ist durch eine Kraft erzeugt, die von der Kennlinie der Feder und von dem Hebelverhältnis aus dem Abstand der Rolle zu dem Schwenkpunkt und dem Abstand der Feder zu dem Schwenkpunkt bestimmt ist. Die Rolle an dem Schwenkhebel rollt dabei auf dem Schlepphebel ab, trifft auf die Rampe und steigt an der Rampe auf. Die Kraft der Feder ist aufgrund des Widerstandes an der Rampe verstärkt. Der Wählkraftverlauf steigt an. Mit der Kraft der Feder, durch die Hebelverhältnisse in dem Hebelsystem Schwenkhebel - Schlepphebel und durch den Anstieg der Rampe ist der Wählkraftverlauf am Schalthebel beim Wählen der Gasse des Rückwärtsganges festgelegt.

### Zusammenfassung der Erfindung

Zu dem Zeitpunkt an dem die Erfindung gemacht wurde, bestand die Aufgabe darin, ein Schaltmodul, umfassend eine Schaltwelle und eine Vorrichtung zum Erzeugen einer Gegenkraft an der Schaltwelle, zu schaffen. Die Vorrichtung lässt sich kostengünstig fertigen und in vormontierte Schaltmodule integrieren. Aufwändige Befestigungen von Federn und Hebelelementen am Gehäuse des Getriebes sollten vermieden werden.

Diese Aufgabe ist nach dem kennzeichnenden Teil des Anspruchs 1 dadurch gelöst, dass an dem Schlepphebel ein Kipphebel angreift. Der Kipphebel ist mittels wenigstens einer oder mehreren Federn gegen den Schlepphebel vorgespannt. Dazu ist der Kipphebel an der Vorrichtung um eine zur Vorrichtung feste Kippachse schwenkbar angeordnet und beim Wählen der Gasse zumindest zeitweise gegen die Rampe an dem Schlepphebel vorgespannt. Der mittels des Schwenkhebels betätigte Schlepphebel schwenkt gegen den Kipphebel, wobei der Kipphebel an der Rampe anliegt. Der Kipphebel wird über die Rampe gegen die Federkräfte um die Kippachse geschwenkt. Dem Hebelsystem Schwenkhebel - Schlepphebel ist der Kipphebel hinzugefügt. Die Wählkräfte an dem Schalthebel sind durch die Abstände der Kraftangriffe zu der Kippachse und durch den Einsatz von einer oder mehreren Federn, durch den Einsatz von Federn mit unterschiedlichen Kennlinien und durch die Kontur der Rampe an einer ansonsten unveränderten Vorrichtung an unterschiedliche Anwendungen anpassbar. Durch eine entsprechende Wahl der Hebellängen in dem Hebelmechanismus Schwenkhebel - Schlepphebel - Kipphebel ist in der Vorrichtung eine gute Auflösung des Kraft-Weg-Verlaufes realisierbar. D. h., auch bei kleinen Schwenkwinkeln an der Schaltwelle steht bei einer vorteilhaften Wahl der Längen der Hebel an dem die Rampe beaufschlagenden Schenkel des Kipphebels genügend Weg im Bogenmaß zur Verfügung, um die Rampen und Vertiefungen an der Rampenkontur fertigungs- und funktionsgerecht zu gestalten.

Eine Ausgestaltung der Erfindung sieht vor, dass der Schlepphebel eine an dem Schlepphebel befestigte sowie um eine Drehachse drehbare Ablaufrolle aufweist. Die Ablaufrolle ist so an dem Schlepphebel befestigt, dass der gegen den Schlepphebel geschwenkte Schwenkhebel den Schlepphebel über die Ablaufrolle beaufschlagt. Die Drehachse der Ablaufrolle und die Schwenkachse des Schlepphebels verlaufen parallel zueinander. Weiterhin ist vorgesehen, dass der Kipphebel eine an dem Kipphebel befestigte sowie um eine Rotationsachse drehbare Rolle aufweist. Der Kipphebel greift über die Rolle an dem Schlepphebel an. Die Rotationsachse der Rolle und die Kippachse des Kipphebels verlaufen parallel zueinander.

Weitere Ausgestaltungen beziehen sich auf die Rampe an dem Schlepphebel. Es ist vorgesehen, dass die Rampe an einer Rampenkontur des Schlepphebels ausgebildet ist. Der Rampe schließt sich eine erste Rastvertiefung an. Die Rampe steigt von der Rastvertiefung weg in Richtung eines Anschlages an.

Der Kipphebel greift in der neutralen Stellung der Schaltwelle in die erste Rastvertiefung ein und arretiert den Schlepphebel mittels der Feder in dieser Position.

Beim Wählen der Gasse bewegt sich der Kipphebel an der Rampe entlang bis an den Anschlag. Der Wählvorgang ist beendet. Bei einer sich anschließenden Schaltbewegung in der Gasse, d. h. beim Längsbewegen der Schaltwelle und somit des Schwenkhebels, liegt der Kipphebel an dem Anschlag an.

Weiter ausgestaltet ist die Rampenkontur mit einer zweiten Rastvertiefung. Der Rampe schließt sich an der von der ersten Rastvertiefung abgewandten Seite der Rampe eine zweite Rastvertiefung an. Die erste Rastvertiefung und die zweite Rastvertiefung nehmen die Rampe in Schwenkrichtung des Schlepphebels somit zwischen sich. In der neutralen Stellung der Schaltwelle sowie in der ersten Gasse greift der Kipphebel wiederum in die erste Rastvertiefung ein. Beim Schalten des Ganges in der zweiten Gasse ist der Schlepphebel mittels des in die zweite Rastvertiefung eingreifenden sowie an dem Anschlag anliegenden Kipphebels arretiert.

Die Reibung zwischen der Rampe und dem Kipphebel ist vermindert, wenn der Kipphebel mit einer Rolle an der Rampe angreift. Der Kipphebel verrastet mit der Rolle alternativ in der ersten oder zweiten Rastvertiefung.

Vorzugsweise sind der Kipphebel und der Schlepphebel schwenkbar an einer Konsole der Vorrichtung angeordnet. Die Konsole ist in ein Schaltmodul integriert, das mehrere der Schaltwellen, z. B. zum Schalten von mindestens vier Vorwärtsgängen und einem Rückwärtsgang, aufnimmt. Die Vorrichtung für das Erzeugen einer Gegenkraft ist für die Gasse des Rückwärtsganges eingesetzt. Die Schaltwelle ist dabei aus der neutralen Stellung zunächst in eine erste Gasse zum Schalten von zwei Vorwärtsgängen und dann mit gleichem Richtungssinn weiter über die erste Gasse hinaus in die Gasse des Rückwärtsganges schwenkbar. Der Schwenkhebel liegt in der ersten Gasse an der Ablaufrolle des Schlepphebels an, wobei der Kipphebel in die erste Rastvertiefung eingreift. Beim wahlweisen Schalten der zwei Vorwärtsgänge wälzt sich die Ablaufrolle an dem Schwenkhebel ab und führt den Schwenkhebel.

Die Erfindung ist nachfolgend anhand eines Ausführungsbeispiels näher erläutert, wobei weitere Ausgestaltungen der Erfindung beschrieben sind.

### Kurze Beschreibung der Zeichnungen

Es zeigen:
- Figur 1: ein teilweise dargestelltes Schaltmodul mit einem Ausführungsbeispiel der Vorrichtung zum Erzeugen einer Gegenkraft an der Schaltwelle, wobei die Schaltwelle in einer neutralen Stellung steht,
- Figur 2: das Schaltmodul nach Figur 1 mit der in die Gasse I-II geschwenkten Schaltwelle,
- Figur 3: das Schaltmodul nach Figur 1, wobei der Rückwärtsgang geschaltet ist,
- Figur 4: eine alternative Darstellung des Kipphebels der Vorrichtung,
- Figur 5: eine schematische Darstellung einer Exzenter-Stelleinrichtung des Kipphebels,
- Figur 6: ein Schaltschema eines Wechselgetriebes,
- Figur 7: eine Seitenansicht der Führung, mit dem Schwenkhebel aus Figur 1 in der Gasse I-II und
- Figur 8: eine Draufsicht auf den teilweise dargestellten Schwenkhebel aus Figur 1.

### Detaillierte Beschreibung der Zeichnungen

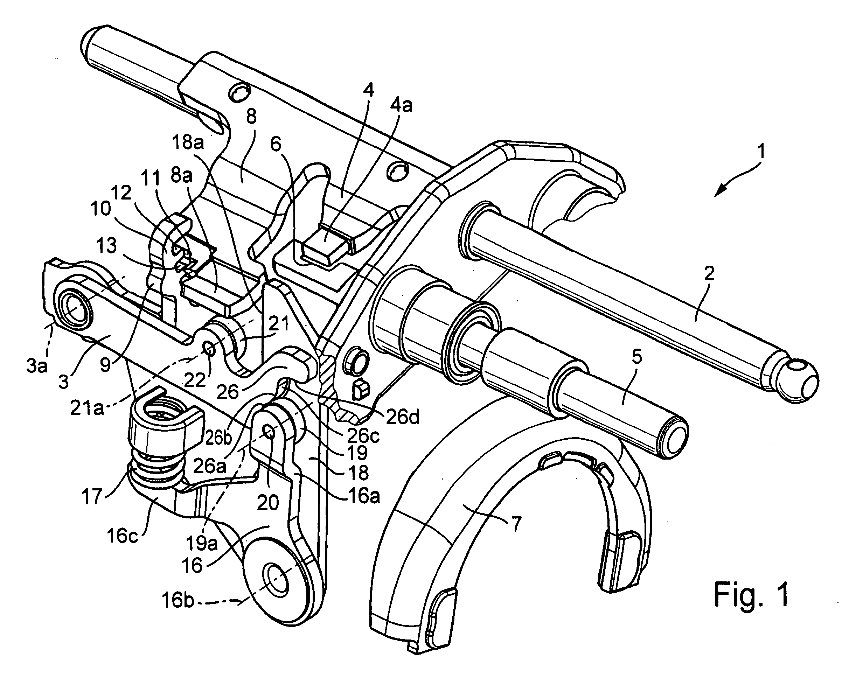

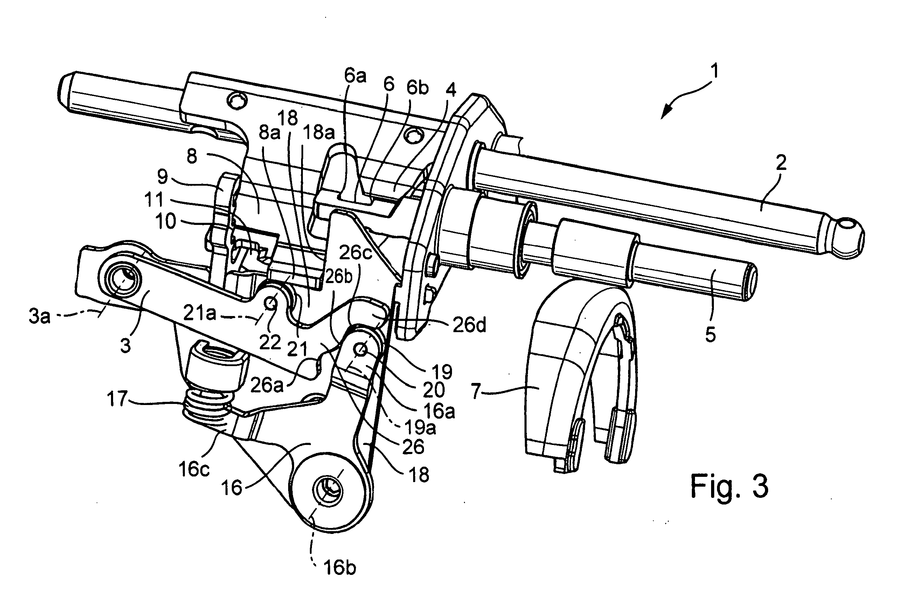

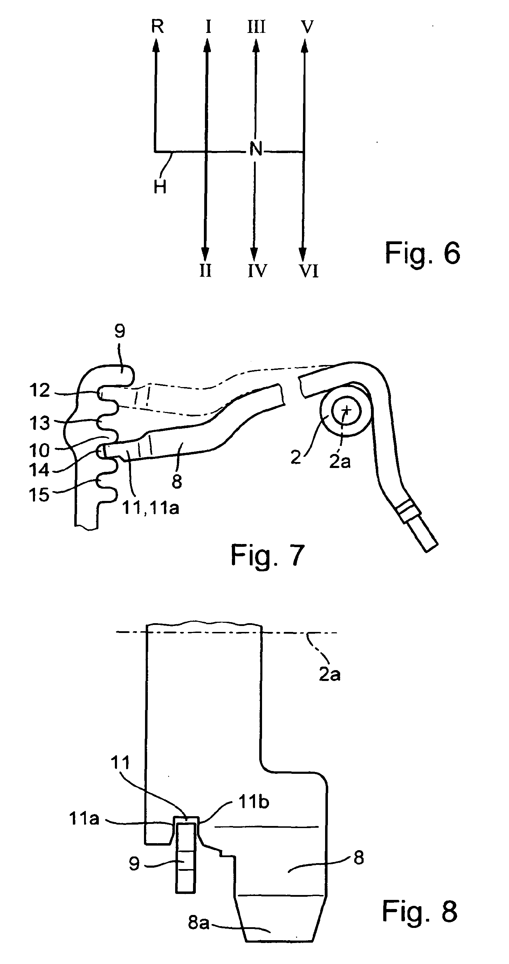

Figur 6 zeigt ein mögliches Schaltschema eines nicht dargestellten Wechselgetriebes. Dem Wechselgetriebe ist ein in den Figuren 1 bis 3 dargestelltes Ausführungsbeispiel einer Vorrichtung 1 zum Erzeugen einer Gegenkraft an einem zu einer Schaltwelle 2 festen Schwenkhebel 3 zugeordnet. Entlang der horizontalen Linie H (Figur 6) in dem Schaltschema ist, beispielsweise durch Schwenkbewegungen an einem Handschalthebel eine der Gassen I-II, III-IV, V-VI sowie R wählbar. Die neutrale Schaltstellung N auf der Linie H entspricht dabei gleichzeitig einer Position in der Gasse III-IV. In den Gassen ist wahlweise einer der jeweiligen Gasse zugeordneten Vorwärtsgänge oder der Rückwärtsgang entlang der vertikalen Linien schaltbar.

Die Halterungen der Vorrichtung 1 sind relativ zu dem nicht dargestellten Schaltgetriebe bewegungsfest. Die Schaltwelle 2 ist relativ zu der Vorrichtung 1 schwenkbar und entlang ihrer Längsmittelachse 2a verschiebbar. Der Wählvorgang zur Wahl einer der Gassen schwenkt die Schaltwelle 2. Mit dem sich an den Wählvorgang anschließenden Schaltvorgang zum Schalten eines der Gänge aus der gewählten Gasse ist die Schaltwelle 2 längs entlang der Längsmittelachse 2a verschiebbar.

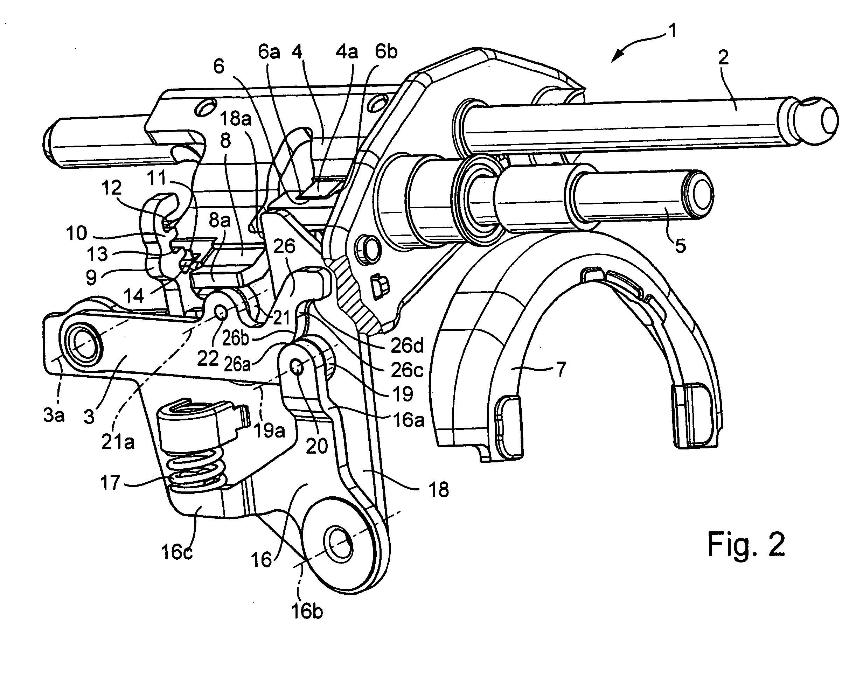

An der Schaltwelle 2 sind fest Schaltfinger angeordnet, von denen nur der Schaltfinger 4 zum Einlegen des ersten bzw. zweiten Ganges sowie des Rückwärtsganges in Figur 1 und 2 bildlich dargestellt ist. In der Stellung N steht der Schaltfinger 4 über einem Schaltmaul 6 einer Schaltschiene 5 (Figur 1). An der Schaltschiene 5 ist üblicherweise eine Schaltgabel 7 befestigt. Der Wählvorgang in die Gasse I-II schwenkt die Schaltwelle 2 mit dem Schaltfinger 4 um die Längsmittelachse 2a. Das Ende 4a des Schaltfingers 4 taucht so in das Schaltmaul 6 ein, dass die Flanken 6a, 6b des Schaltmaules das Ende 4a des Schaltfingers 4 zwischen sich nehmen (Figur 2). Mit dem sich an den Wählvorgang anschließenden Schaltvorgang wird die Schaltwelle 2 entlang ihrer Längsmittelachse 2a zur Vorrichtung 1 verschoben. Der Schaltfinger 4 beaufschlagt je nach Verschieberichtung eine der Flanken 6a, 6b des Schaltmaules 6. Die Schaltschiene 5 wird somit synchron mit der Schaltwelle 2 verschoben und der erste bzw. der zweite Gang geschaltet.

Weiterhin weist die Schaltwelle 2 einen Schwenkhebel 8 auf, der in der beschriebenen Anwendung gleichzeitig mit einer Kulisse 10 an einer Führung 9 zusammenwirkt. Der Schwenkhebel 8 und der Schaltfinger 4 sind einteilig an einem Blechformteil ausgebildet. Die Führung 9 ist in dem Bewegungsraum des mit der Schaltwelle 2 schwenkenden sowie mit der Schaltwelle 2 verschiebbaren Schwenkhebels 8 angeordnet. Bei dem Wählvorgang schwenkt der Schwenkhebel 8 mit dem Schaltfinger 4 synchron um die Längsmittelachse 2a. Dabei greift die Führung 9 in einen Schlitz 11 an dem Schwenkhebel 8 ein. Der Schlitz 11 ist an dem Schwenkhebel 8 so ausgebildet, dass der Schwenkhebel 3 bei einer Wählbewegung entlang der Linie H zu der Führung 9 ungehindert schwenkt. Die Führung 9 durchdringt dabei den Schlitz 11 (Figur 8). Der Schwenkhebel 8 und somit die Schaltwelle 2 sind über die der Führung 9 zugewandten Flanken 11a, 11b des Schlitzes 11 an der Führung 9 schwenkbar geführt. Eine Längsbewegung des Schwenkhebels 3 zur Führung 9 ist nicht möglich, da die Flanken 11a, 11b des Schlitzes die Führung 9 längs zwischen sich nehmen (Figur 8). Die Schaltwelle 2 schwenkt bei Wählbewegungen bis der Schwenkhebel 8 eine Position einnimmt, in der einer der an der Schaltwelle 2 angeordneten Schaltfinger in eine der gewählten Gassen in eine Schaltschiene eingreift. Der Schlitz 11 an dem geschwenkten Schwenkhebel 8 steht in den Gassen jeweils einer der Nuten 12, 13, 14, 15 an der Kulisse 10 gegenüber. Der Schwenkhebel 8 ist erst in einer der gewählten Gassen zu der Führung 9 längs beweglich, wenn eine der Flanken 11a, 11b des Schlitzes 11 und damit der Schwenkhebel 8 längs in eine der Nuten 12, 13, 14, 15 eindringen kann. Der Schwenkhebel 8 durchfährt dabei eine der Nuten 12, 13, 14, 15, ohne an der Führung 9 anzuschlagen.

In den Nuten 12, 13, 14, 15 ist der Schwenkhebel 2 in Abhängigkeit von der gewählten Gasse während des Schaltens einer der Gänge geführt. Schwenkbewegungen des Schwenkfingers 8 und somit der Schaltfinger sind während des Schaltens in der Gasse nicht möglich, da die Flanken 12a, 12b, 13a, 13b, 14a, 14b, 15a, 15b der jeweiligen Nut 12, 13, 14, 15 den Schwenkhebel 8 in Schwenkrichtung zwischen sich nehmen. In Figur 7 sind der Schwenkhebel 2 und die Führung 9 im Detail dargestellt. Der Schwenkhebel 8 ist in der Nut 13 bei Schaltbewegungen innerhalb der Gasse III-IV aus der neutralen Schaltstellung N in den dritten oder vierten Gang und in der Nut 12 bei Schaltbewegungen innerhalb der Gasse V-VI in den fünften oder sechsten Gang geführt. Bei Schaltbewegungen innerhalb der Gasse I-II in den ersten oder zweiten Gang durchfährt der Schwenkhebel 8 die Nut 14 und beim Schalten des Rückwärtsganges R die Nut 15.

In der Stellung N steht der Schwenkhebel 8 in einer Ausgangsstellung zur Nut 13. Wird der Schwenkhebel bei einer Wählbewegung in die Gasse I-II von der Nut 13 weggeschwenkt, ist somit auch der Schaltfinger 4 frei schwenkbar und taucht schließlich in das Schaltmaul 6 ein. Diese Bewegung entspricht einer Schaltbewegung in dem Schaltschema nach Figur 6 aus der Position N entlang der Linie H. Der Schwenkhebel 8 folgt der Bewegung des Schaltfingers 4 bei einer sich dem Wählvorgang anschließenden Schaltbewegung und durchfährt die Nut 14 längs ungehindert, bis der erste oder zweite Gang geschaltet ist.

Die Vorrichtung 1 zum Erhöhen der Wählkraft weist einen Schlepphebel 3 auf. Der Schlepphebel 3 ist um eine Schwenkachse 3a relativ zu der Längsmittelachse 2a schwenkbar. Beim Schalten des ersten oder zweiten Ganges in der Gasse I-II, beim Wählen der Gasse R sowie beim Schalten des Rückwärtsganges steht der Schlepphebel 3 mit einem Ende 8a des Schwenkhebels 8 in einer Wirkverbindung. Weiterhin ist die Vorrichtung mit einem Kipphebel 16 und einer Feder 17 versehen. Der Kipphebel 16 steht in einer Wirkverbindung mit dem Schlepphebel 3. Dazu liegt der Kipphebel 16 mit einem Ende eines Schenkels 16a an dem Schlepphebel 3 an und ist dabei mittels der Feder 17 gegen den Schlepphebel 3 vorgespannt. Die Feder 17 greift zu einer Kippachse 16b des Kipphebels 16 beabstandet an einem Schenkel 16c des Kipphebels 16 an. Der Kipphebel 16 und die Feder 17 stützen sich an einer Konsole 18 der Vorrichtung 1 zu dem nicht dargestellten Getriebe ab. Der Kipphebel 16 liegt an einem Ende des Schlepphebels 3 mittels einer Rolle 19 an. Die Rolle 19 ist mit einem Bolzen 20 um die Rotationsachse 19a der Rolle drehbar sowie zu der Kippachse 16b beabstandet an dem Kipphebel 16 befestigt. Der Schlepphebel 3 ist mit einer Ablaufrolle 21 versehen. Die Ablaufrolle 21 ist von der Schwenkachse 3a entfernt mittels eines Bolzens 22 um eine Drehachse 21a drehbar an dem Schlepphebel 3 befestigt. Die Ablaufrolle 21 ragt in die Schwenkbahn des Endes 8a des Schwenkhebels 8 hinein. Die Drehachse 21a der Ablaufrolle 21, die Rotationsachse 19a der Rolle 19 und die Kippachse 16b des Kipphebels 16 sind parallel zueinander ausgerichtet.

Der Kipphebel 16 liegt mit der Rolle 19 an einer Rampenkontur 26 des Schlepphebels 3 an. Die Rampenkontur 26 weist eine erste Rastvertiefung 26a sowie eine zweite Rastvertiefung 26c auf. In den Gassen I-II, III-IV und V-VI ist die Rolle 19 mittels der am Kipphebel 16 unter- oder übersetzten Kraft der Feder 17 in der ersten Rastvertiefung 26a verrastet. Der Kipphebel 16 arretiert über die Rolle 19 in der ersten Rastvertiefung 26a den Schlepphebel 3 unbeweglich zur Konsole 18. Der beim Wählvorgang aus der Stellung N in die Gasse I-II um die Längsmittelachse 2a schwenkende Schwenkhebel 8 trifft mit seinem Ende 8a auf die Ablaufrolle 21, ohne dass der Schwenkhebel 8 den Schlepphebel 3 um die Schwenkachse 3a schwenkt. In der Gasse I-II liegt das Ende 8a des Schwenkhebels 8 an der Ablaufrolle 21 an. Die Ablaufrolle 21 und der Schwenkhebels 8 berühren sich in der Gasse I-II nur leicht. Die Stellung des Schlepphebels 3 ist dabei so justiert, dass der Schwenkhebel 8 bei Schaltbewegungen in der Gasse I-II längs ungehindert durch die Nut 14 der Führung 9 beweglich ist. Die Ablaufrolle 21 wälzt sich dabei um die Drehachse 21a drehend an dem sich mit der Schaltwelle 2 längsbewegenden Ende 8a ab. Die Schaltwelle 2 ist mittels der Ablaufrolle 21 beim Schalten in den ersten oder zweiten Gang komfortabel geführt. Der Schaltvorgang in den ersten oder zweiten Gang wird durch diese rollengelagerte Gassenführung komfortabel.

Das Wählen entlang der Linie H über die Gassen I-II hinaus beaufschlagt den Schlepphebel 3 an der Ablaufrolle 21 mittels des Schwenkhebels 8. Der Schlepphebel 3 schwenkt unter dieser Zwangsbewegung um die Schwenkachse 3a und gegen die Rolle 19. Die Wählbewegung wirkt dadurch gegen die Kraft der Feder 17 an dem Kipphebel 16. Dabei steigt die Rolle 19 aus der ersten Rastvertiefung 26a anfangs an der Rampe 26b in Richtung der zweiten Rastvertiefung 26c auf. Der Kipphebel 16 schwenkt gleichzeitig um die Kippachse 16b gegen die Feder 17. Der Widerstand gegen die Schwenkbewegung an dem Schwenkhebel 8 nimmt durch die Feder 17 und die an der Rampe 26b aufsteigende Rolle 19 zu. An dem nicht dargestellten Handschalthebel im Fahrzeug wird dem Bediener durch einen Anstieg der Schaltkraft signalisiert, dass er im Begriff ist die Gasse des Rückwärtsganges einzuwählen.

Die Kennlinie der Feder 17, die Lage der Feder 17 zu der Kippachse 16b, die Lage der Rotationsachse 19a zu der Kippachse 16b sowie der Anstieg der Rampe 26b bestimmen den Verlauf und den Anstieg der Kraft am Schalthebel.

Der Schwenkhebel 8 schwenkt zur Wahl der Gasse des Rückwärtsganges aus der Gasse I-II und beaufschlagt den Schlepphebel 3, der dadurch um die Schwenkachse 3a schwenkt. Die Rolle 19 steigt aus der ersten Rastvertiefung 26a auf die Rampe 26b auf und rollt weiter auf der Rastkontur 26 ab, bis die Rolle 19 in der zweiten Rastvertiefung 26c verrastet. Dabei verlässt die Rolle 19 die Rampe 26b. Der Widerstand an dem Schwenkhebel 8 lässt nach, da die Rolle 19 auf dem Weg in die zweite Rastvertiefung auf der Rampenkontur 26 abwärts rollt. An dem Handschalthebel sinkt die Wählkraft wieder auf ein geringeres Niveau. Aus dieser Position kann der Schwenkhebel 8 einer Schaltbewegung zum Schalten des Rückwärtsganges in der Nut 15 geführt ungehindert folgen.

In der Gasse R bewegt sich der Schwenkhebel 8 beim Schalten des Rückwärtsganges längs zu dem Schlepphebel 3. Die Ablaufrolle 21 läuft, sich um die Drehachse 21a drehend, an dem sich längs bewegenden Ende 8a des Schwenkhebels 8 ab. Der Schaltvorgang in den Rückwärtsgang wird durch diese rollengelagerte Gassenführung komfortabel.

Die Schwenkbewegungen des Schwenkhebels 8 während des Wählens der Gasse R und die Längsbewegung des Schwenkhebels 8 beim Schalten des Rückwärtsganges sind begrenzt. Der Schwenkweg des Schwenkhebels 8 ist mittels eines Anschlages 26d an der Rampenkontur 26 begrenzt. Der Anschlag 26d begrenzt die zweite Rastvertiefung 26c an der von der Rampe 26b abgewandten Seite. Der Anschlag 26d verhindert, dass die Rolle 19 über die zweite Rastvertiefung 26c aus der Gasse R hinaus bewegbar ist. Eine Bewegung des Schalthebels über die Gasse R entlang der Linie H ist verhindert. Der Schwenkhebel 8 schlägt längs an einem den Schwenkhebel 8 längs im Wege liegenden weiteren Anschlag 18a an, wenn der Rückwärtsgang geschaltet ist. Dieser Anschlag 18a ist an der Konsole 18 ausgebildet und verhindert eine Schaltbewegung am Schalthebel über die Schaltstellung des Rückwärtsganges hinaus.

Bei der Montage der Vorrichtung 1 ist die Stellung des Schlepphebels 3 zu dem Schwenkhebel 8 durch Justieren der Lage der Kippachse 16b zu der Lage der Schwenkachse 3b mittels einer Exzenter-Stelleinrichtung abgesichert. Die Stellung des Schlepphebels 3 ist in der Gasse I-II so justiert, dass der Schwenkhebel 8 bei Schaltbewegungen in der Gasse I-II längs ungehindert durch die Nut 14 der Führung 9 beweglich ist. Die Ablaufrolle 21 läuft, ohne nennenswerte Vorspannung gegen das Hebelende 8a, an dem sich längs bewegenden Ende 8a des Schwenkhebels 8 ab. Die Exzenter-Stelleinrichtung mit einem scheibenförmigen Exzenter 23 ist in Figur 7 schematisch dargestellt. Die Exzenterachse 23a durchdringt die Kippebene des Kipphebels 16 senkrecht. Der Kipphebel 16 ist mit einer kreisrunden Bohrung 16d versehen. In diese Bohrung 16d ist der Exzenter 23, mit einer der Bohrung 16d angepassten zylindrischen Außenkontur eingesetzt. Der Kipphebel 16 kippt bzw. schwenkt auf dem zu der Konsole 18 festen Exzenter 23 um die Kippachse 16b. Die Kippachse 16b ist die Mittenachse der Bohrung 16d. Die Exzenterachse 23a ist zu der Kippachse 16b exzentrisch angeordnet.

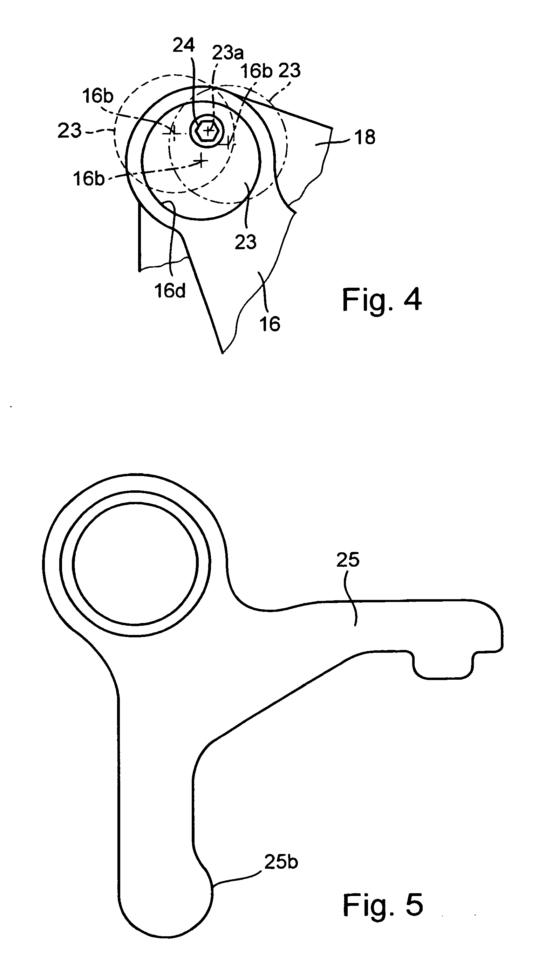

Der Exzenter 23 greift bei der Montage des Kipphebels 16 um die Exzenterachse 23a zunächst schwenkbar an der Konsole 18 an. Mit dem Schwenken des Exzenters 23 um die Exzenterachse 23a schwenkt auch die Kippachse 16b um die Exzenterachse 23a. Die Lage der Kippachse 16b des Kipphebels 16 ist mittels Schwenkbewegungen des Exzenters 23 zu der Lage der Schwenkachse 3a des Schlepphebels einstellbar. Wahlstellungen des Exzenters sind in Figur 5 mit unterbrochener Linie dargestellt. Ist die Lage des Kipphebels 16 zu dem Schlepphebel 3 in gewünschter Weise justiert, wird der Exzenter 23 an der Konsole unbeweglich befestigt. Der Exzenter 23 ist z. B. mittels einer Schraubverbindung an der Konsole 18 befestigt. Die Mittenachse der Schraubverbindung verläuft dabei mit der Exzenterachse 23a. Bei der Montage des Exzenters 23 an die Konsole 18 wird der Exzenter 23 mittels der Schraube 24 zunächst an die Konsole 18 schwenkbar geheftet. Die Stellung des Kipphebels 16 und des Schlepphebels 3 werden zunächst durch Schwenken um die Schraube 24 justiert und im Anschluss wird die Schraube angezogen, bis der Exzenter 23 zur Konsole 18 unbeweglich fest ist. Alternativ ist die Befestigung des Exzenters mittels einer Pressverbindung vorgesehen. Der Exzenter bzw. die Konsole weisen dazu einen Zapfen mit einer zylindrischen Außenmantelfläche auf. Die Mittelachse des Zapfens ist die Exzenterachse 23a. Der Zapfen wird bei der Montage des Kipphebels 16 zunächst an einem kreisrunden Loch vorzentriert und die Stellungen der Hebel 3 und 16 zueinander justiert. Anschließend wird der Zapfen in die Bohrung eingepresst und sitzt somit fest an der Konsole.

Die verschiedenen Hebel und die Konsole der Vorrichtung zum Erhöhen der Wählkraft sind vorzugsweise aus Blech durch Stanzen, Biegen und Prägen hergestellt. In einfacheren Vorrichtungen wird auf die Ablaufrolle bzw. die Rolle verzichtet. So ist z. B. mit einer Ausgestaltung der Erfindung vorgesehen und in Figur 5 dargestellt, dass der Kipphebel 25 anstelle einer Rolle eine an einem Schenkel 25a nach außen gewölbte Kontur 25b aufweist. Mit der nach außen gewölbten Kontur 25b fährt der geschwenkte Kipphebel 25 an einer Rampenkontur eines Schlepphebels entlang und verrastet in Rastvertiefungen an der Rampenkontur.

### Bezugszeichen

- 1: Vorrichtung
- 2: Schaltwelle
- 2a: Längsmittelachse
- 3: Schlepphebel
- 3a: Schwenkachse
- 4: Schaltfinger
- 4a: Ende
- 5: Schaltschiene
- 6: Schaltmaul
- 6a: Flanke
- 6b: Flanke
- 7: Schaltgabel
- 8: Schwenkhebel
- 8a: Ende
- 9: Führung
- 10: Kulisse
- 11: Schlitz
- 11a: Flanke
- 11b: Flanke
- 12: Nut
- 13: Nut
- 14: Nut
- 15: Nut
- 16: Kipphebel
- 16a: Schenkel
- 16b: Kippachse
- 16c: Schenkel
- 16d: Bohrung
- 17: Feder
- 18: Konsole
- 18a: Anschlag
- 19: Rolle
- 19a: Rotationsachse
- 20: Bolzen
- 21: Ablaufrolle
- 21a: Drehachse
- 22: Bolzen
- 23: Exzenter
- 23a: Exzenterachse
- 24: Schraube
- 25: Kipphebel
- 25b: Kontur
- 26: Rampenkontur
- 26a: Rastvertiefung
- 26b: Rampe
- 26c: Rastvertiefung
- 26d: Anschlag

## Patentansprüche

1. Schaltmodul, umfassend eine Schaltwelle (2) mit einem zu dieser festen Schwenkhebel (8) und eine Vorrichtung (1) zum Erzeugen einer Gegenkraft an dem Schwenkhebel (8), die einen Schlepphebel (3) umfasst, wobei die Schaltwelle (2) zur Wahl mindestens einer Gasse aus einer neutralen Stellung in der Vorrichtung (1) schwenkbar sowie zum Schalten wenigstens eines Ganges in der Gasse zur Vorrichtung (1) längs verschiebbar ist, und wobei der Schwenkhebel (8) bei der Wahl der Gasse zumindest zeitweise den um eine Schwenkachse (3a) schwenkbaren sowie mit einer Rampe (26b) versehenen Schlepphebel (3), gegen an der Rampe (26b) umgesetzte Federkräfte beaufschlagt, **dadurch gekennzeichnet, dass** die Vorrichtung (1) einen an dem Schlepphebel (3) angreifenden Kipphebel (16, 25) und wenigstens eine Feder (17) umfasst, wobei der Kipphebel (16, 25) mittels der die Federkräfte erzeugenden Feder (17) gegen den Schlepphebel (3) vorgespannt sowie um eine zur Vorrichtung (1) feste Kippachse (16b) schwenkbar ist und dass der Kipphebel (16) beim Wählen der Gasse zumindest zeitweise gegen die Rampe (26b) vorgespannt ist, wobei der Schlepphebel (3) den Kipphebel (16) an der Rampe (26b) gegen die Federkräfte um die Kippachse (16b) schwenkt.

2. Schaltmodul nach Anspruch 1, **dadurch gekennzeichnet, dass** der Schlepphebel (3) eine an dem Schlepphebel (3) befestigte sowie um eine Drehachse (21 a) drehbare Ablaufrolle (21) aufweist, wobei der Schwenkhebel (8) den Schlepphebel (3) über die Ablaufrolle (21) beaufschlagt und wobei die Drehachse (21a) und die Schwenkachse (3a) parallel zueinander verlaufen.

3. Schaltmodul nach Anspruch 1, **dadurch gekennzeichnet, dass** der Kipphebel (16) eine an dem Kipphebel (16) befestigte sowie um eine Rotationsachse (19a) drehbare Rolle (19) aufweist, wobei der Kipphebel (16) mit der Rolle (19) an dem Schlepphebel (3) angreift und wobei die Rotationsachse (19a) und die Kippachse (16a) parallel zueinander verlaufen.

4. Schaltmodul nach Anspruch 1, **dadurch gekennzeichnet, dass** die Rampe (26b) an einer Rampenkontur (26) des Schlepphebels (3) ausgebildet ist und sich dabei einer ersten Rastvertiefung (26a) anschließt, wobei die Kontur der Rampe (26b) von der Rastvertiefung (26a) weg in Richtung eines Anschlages (26d) der Rampenkontur 26 ansteigt und dass der Kipphebel (16, 25) in der Gasse in die erste Rastvertiefung (26a) eingreift.

5. Schaltmodul nach Anspruch 4, **dadurch gekennzeichnet, dass** sich der Rampe (26b) eine zweite Rastvertiefung (26c) anschließt, wobei die erste Rastvertiefung (26a) und die zweite Rastvertiefung (26c) die Rampe (26b) in Schwenkrichtung des Schlepphebels (3) zwischen sich nehmen und dass der Kipphebel (16, 25) in einer ersten Gasse in die erste Rastvertiefung (26a) eingreift, wobei der Kipphebel (16, 25) in einer zweiten Gasse in die zweite Rastvertiefung (26c) eingreift und an dem Anschlag (26d) anliegt.

6. Schaltmodul nach Anspruch 4, **dadurch gekennzeichnet, dass** der Kipphebel (16) eine an dem Kipphebel (16) befestigte sowie um eine Rotationsachse (19a) drehbare Rolle (19) aufweist, wobei der Kipphebel (16) mit der Rolle (19) an der Rampe (26b) angreift sowie mit der Rolle (19) in die erste Rastvertiefung (26a) eingreift und wobei die Rotationsachse (19a) und die Kippachse (16b) parallel zueinander verlaufen.

7. Schaltmodul nach Anspruch 1, **dadurch gekennzeichnet, dass** der Kipphebel (16, 25) mit einer zu der Kippachse (16b) beabstandet angeordneten sowie sich an der Vorrichtung (1) abstützenden Feder (17) gegen den Schlepphebel (3) vorgespannt ist.

8. Schaltmodul nach Anspruch 1, **dadurch gekennzeichnet, dass** der Kipphebel (16) zwei von der Kippachse (16b) wegweisende Schenkel (16a, 16c) aufweist, wobei an dem einen der Schenkel (16c) die Feder (17) angreift und wobei der Kipphebel (16) mit einem freien Ende des anderen der Schenkel (16a) gegen den Schlepphebel (3) vorgespannt ist.

9. Schaltmodul nach Anspruch 1, **dadurch gekennzeichnet, dass** der Kipphebel (16) und der Schlepphebel (3) schwenkbar an einer Konsole (18) der Vorrichtung (1) angeordnet sind.

10. Schaltmodul nach Anspruch 1, **dadurch gekennzeichnet, dass** die Schaltwelle (2), der Kipphebel (16), Schlepphebel (3) und die Feder (17) an dem Schaltmodul zum Schalten von mindestens vier Vorwärtsgängen und einem Rückwärtsgang aufgenommen sind, wobei die Vorrichtung (1) zum Erzeugen einer Gegenkraft bei der Wahl der Gasse des Rückwärtsganges vorgesehen ist.

11. Schaltmodul nach Anspruch 4**, dadurch gekennzeichnet, dass** die Schaltwelle (2), der Kipphebel (16), Schlepphebel (3) und die Feder (17) an dem Schaltmodul zum Schalten von mindestens vier Vorwärtsgängen und einem Rückwärtsgang aufgenommen sind, wobei die Vorrichtung (1) zum Erzeugen einer Gegenkraft bei der Wahl der Gasse des Rückwärtsganges vorgesehen ist und dass die Schaltwelle (2) aus der neutralen Stellung zunächst in eine erste Gasse zum Schalten von zwei Vorwärtsgängen und dann mit gleichem Richtungssinn über die erste Gasse hinaus in die Gasse des Rückwärtsganges schwenkbar ist, wobei der Schwenkhebel (8) in der ersten Gasse an der Ablaufrolle (21) des Schlepphebels (3) anliegt sowie der Kipphebel (16) in die erste Rastvertiefung (26a) eingreift wodurch die Ablaufrolle (21), sich beim Schalten der zwei Vorwärtsgänge an dem Schwenkhebel (8) abwälzend, den Schwenkhebel (8) führt.

## Claims

1. Selector unit, comprising a selector shaft (2) with a pivot lever (8) rigid therewith and a device (1) for generating a counterforce on the pivot lever (8), which comprises a drag lever (3), wherein the selector shaft (2) is pivotable in the device (1) from a neutral position for selection of at least one channel and is displaceable longitudinally to the device (1) in order to select at least one gear in the channel, and wherein the pivot lever (8) acts in selecting the channel at least temporarily on the drag lever (3) pivotable about a pivotal axis (3a) and provided with a ramp (26b), against spring forces shifted on the ramp (26b), **characterised in that** the device (1) comprises a rocker arm (16, 25) acting on the drag lever (3) and comprises at least one spring (17), the rocker arm (16, 25) being biased by means of the spring (17) generating the spring forces against the drag lever (3) and being pivotable about a tilt axis (16b) fixed relative to the device (1), and **in that** the rocker arm (16) is biased at least temporarily against the ramp (26b) in the selection of the channel, in which case the drag lever (3) pivots the rocker arm (16) about the tilt axis (16b) on the ramp (26b) against the spring forces.

2. Selector unit according to claim 1, **characterised in that** the drag lever (3) has a feed roller (21) fixed to the drag lever (3) and rotatable about an axis of rotation (21a), wherein the pivot lever (8) acts on the drag lever (3) via the feed roller (21) and wherein the axis of rotation (21 a) and the pivotal axis (3a) extend parallel to one another.

3. Selector unit according to claim 1, **characterised in that** the rocker arm (16) has a rotary roller (19) fixed to the rocker arm (16) and rotatable about an axis of rotation (19a), wherein the rocker arm (16) acts with the roller (19) on the drag lever (3) and wherein the axis of rotation (19a) and the tilt axis (16a) extend parallel to one another.

4. Selector unit according to claim 1, **characterised in that** the ramp (26b) is formed on a ramp contour (26) of the drag lever (3) and in this case adjoins a first catch recess (26a), wherein the contour of the ramp (26b) rises away from the catch recess (26a) in the direction of a stop (26d) of the ramp contour (26) and **in that** the rocker arm (16, 25) engages in the first catch recess (26a) in the channel.

5. Selector unit according to claim 4, **characterised in that** the ramp (26b) adjoins a second catch recess (26c), wherein the first catch recess (26a) and the second catch recess (26c) receive the ramp (26b) between them in the pivotal direction of the drag lever (3), and **in that** the rocker arm (16, 25) engages in the first catch recess (26a) in a first channel, in which case the rocker arm (16, 25) engages in the second catch recess (26c) in a second channel and abuts the stop (26d).

6. Selector unit according to claim 4, **characterised in that** the rocker arm (16) has a roller (19) fixed to the rocker arm (16) and rotatable about an axis of rotation (19a), wherein the rocker arm (16) acts with the roller (19) on the ramp (26b) and with the roller (19) engages in the firs catch recess (26a), and wherein the axis of rotation (19a) and the tilt axis (16b) extend parallel to one another.

7. Selector unit according to claim 1, **characterised in that** the rocker arm (16, 25) is biased against the drag lever (3) with a spring (17) disposed apart from the tilt axis (16b) and bearing on the device (1).

8. Selector unit according to claim 1, **characterised in that** the rocker arm (16) has two flanges (16a, 16c) pointing away form the tilt axis (16b), wherein the spring (17) acts on one of the flanges (16c) and the rocker arm (16) is biased against the drag lever (3) with a free end of the other flange (16a).

9. Selector unit according to claim 1, **characterised in that** the rocker arm (16) and the drag lever (3) are mounted pivotably on a bracket (18) of the device (1).

10. Selector unit according to claim 1, **characterised in that** the selector shaft (2), the rocker arm (16), drag lever (3) and spring (17) are received on the selector unit for selecting at least four forward gears and one reverse gear, wherein the device (1) is provided to generate a counterforce if the channel of the reverse gear is selected.

11. Selector unit according to claim 4, **characterised in that** the selector shaft (2), the rocker arm (16), drag lever (3) and spring (17) are received on the selector unit for selecting at least four forward gears and one reverse gear, wherein the device (1) is provided for generating a counterforce if the channel of the reverse gear is selected and **in that** the selector shaft (2) may be pivoted out of the neutral position first into a first channel for selecting two forward gears and then with the same direction beyond the first channel into the channel of the reverse gear, wherein the pivot lever (8) in the first channel abuts the feed roller (21) of the drag lever (3) and the rocker arm (16) engages in the first catch recess (26a), whereby the feed roller (21), rolling off the pivot lever (8) during selection of the two forward gears, guides the pivot lever (8).

## Revendications

1. Module de commande, comprenant un arbre de commande (2) avec un levier de basculement (8) fixe par rapport à cet arbre et un dispositif (1) pour générer une force antagoniste sur le levier de basculement (8), qui comprend un levier de remorquage (3), l'arbre de commande (2) pouvant basculer pour choisir au moins un passage à partir d'une position neutre dans le dispositif (1) et pouvant coulisser dans le sens longitudinal dans le passage par rapport au dispositif (1) pour commander au moins une vitesse, le levier de basculement (8) sollicitant lors du choix du passage au moins temporairement le levier de remorquage (3) pouvant basculer autour d'un axe de pivotement (3a) et doté d'une rampe (26b), contre des forces de ressort appliquées sur la rampe (26b), **caractérisé en ce que** le dispositif (1) comprend un levier de basculement (16, 25) s'appliquant sur le levier de remorquage (3) et au moins un ressort (17), le levier de basculement (16, 25) étant pré-tendu contre le levier de remorquage (3) au moyen du ressort (17) générant les forces de ressort et pouvant basculer autour d'un axe de basculement (16b) fixe par rapport au dispositif (1) et **en ce que** le levier de basculement (16) est pré-tendu au moins temporairement contre la rampe (26b) lors de la sélection du passage, le levier de remorquage (3) faisant basculer le levier de basculement (16) sur la rampe (26b) contre les forces de ressort autour de l'axe de basculement (16b).

2. Module de commande selon la revendication 1, **caractérisé en ce que** le levier de remorquage (3) présente un galet de déroulement (21) fixé sur le levier de remorquage (3) et pouvant tourner autour d'un axe de rotation (21a), le levier de basculement (8) sollicitant le levier de remorquage (3) au moyen du galet de roulement (21) et l'axe de rotation (21a) et l'axe de pivotement (3a) étant parallèles entre eux.

3. Module de commande selon la revendication 1, **caractérisé en ce que** le levier de basculement (16) présente un galet (19) fixé sur le levier de basculement (16) et pouvant tourner autour d'un axe de rotation (19a), le levier de basculement (16) s'appliquant avec le galet (19) sur le levier de remorquage (3) et l'axe de rotation (19a) et l'axe de basculement (16a) étant parallèles entre eux.

4. Module de commande selon la revendication 1, **caractérisé en ce que** la rampe (26b) est réalisée sur un contour de rampe (26) du levier de remorquage (3) et se raccorde alors à une première cavité d'encliquetage (26a), le contour de la rampe (26b) croissant à partir de la cavité d'encliquetage (26a) en direction d'une butée (26b) du contour de rampe et **en ce que** le levier de basculement (16, 25) s'engage dans le passage dans la première cavité d'encliquetage (26a).

5. Module d'encliquetage selon la revendication 4, **caractérisé en ce qu'**une seconde cavité d'encliquetage (26c) se raccorde à la rampe (26b), la première cavité d'encliquetage (26a) et la seconde cavité d'encliquetage (26c) forment entre eux la rampe (26b) dans le sens de pivotement du levier de remorquage (3) et **en ce que** le levier de basculement (16, 25) s'engage dans un premier passage dans la première cavité d'encliquetage (26a), le levier de basculement (16, 25) s'engageant dans un second passage dans la seconde cavité d'encliquetage (26a) et s'appuyant sur la butée (26d).

6. Module de commande selon la revendication 4, **caractérisé en ce que** le levier de basculement (16) présente un galet (19) fixé sur le levier de basculement (16) et pouvant tourner autour d'un axe de rotation (19a), le levier de basculement (16) s'engageant avec le galet (19) sur la rampe (26b) et s'engageant avec le galet (19) dans la première cavité d'encliquetage (26a), et l'axe de rotation (19a) et l'axe de basculement (16b) étant agencés parallèlement entre eux.

7. Module de commande selon la revendication 1, **caractérisé en ce que** le levier de basculement (16, 25) est pré-tendu avec un ressort (17) disposé à distance de l'axe de basculement (16b) et s'appuyant sur le dispositif (1) contre le levier de remorquage.

8. Module de commande selon la revendication 1, **caractérisé en ce que** le levier de basculement (16) présente deux branches (16a, 16c) partant de l'axe de basculement (16b), le ressort (17) s'engageant sur l'une des branches (16c) et le levier de basculement (16) étant pré-tendu avec une extrémité libre de l'autre des branches (16a) contre le levier de remorquage (3).

9. Module de commande selon la revendication 1, **caractérisé en ce que** le levier de basculement (16) et le levier de remorquage (3) sont disposés de façon basculante sur une console (18) du dispositif (1).

10. Module de commande selon la revendication 1, **caractérisé en ce que** l'arbre de commande (2), le levier de basculement (16), le levier de remorquage (3) et le ressort (17) sont réceptionnés sur le module de commande pour la commande d'au moins quatre vitesses avant et d'une marche arrière, le dispositif (1) pour générer une force antagoniste étant prévu lors du choix du passage de la marche arrière.

11. Module de commande selon la revendication 4, **caractérisé en ce que** l'arbre de commande (2), le levier de basculement (16), le levier de remorquage (3) et le ressort (17) sont réceptionnés sur le module de commande pour la commande d'au moins quatre vitesses avant et d'une marche arrière, le dispositif (1) pour générer une force antagoniste étant prévu lors du choix du passage de la marche arrière et **en ce que** l'arbre de commande (2) peut basculer à partir de la position neutre d'abord dans un premier passage pour la commande de deux marche avant et ensuite avec le même sens de direction au-delà du premier passage dans le passage de la marche arrière, le levier de basculement (8) s'appliquant dans le premier passage sur le galet de déroulement (21) du levier de remorquage (3) et le levier de basculement (16) s'engagent dans la première cavité d'encliquetage (26a), de sorte que le galet de déroulement (21) guide le levier de basculement (8) en roulant sur le levier de basculement (8) lors de la commande des deux vitesses avant.
